# FASCICULE DE BREVET EUROPEEN

(11) **EP 2 659 473 B1**
(45) Date de publication et mention de la délivrance du brevet: **04.05.2016**
(21) Numéro de dépôt: 11757324.6
(22) Date de dépôt: 15.09.2011
(51) Int. Cl.: G08G 1/16, B60W 30/18

(54) **SYSTÈME ET MÉTHODE D'AIDE ACTIVE AU CHANGEMENT DE VOIE POUR UN VÉHICULE AUTOMOBILE**
SYSTEM UND VERFAHREN FÜR AKTIVE SPURWECHSELHILFE FÜR EIN KRAFTFAHRZEUG
SYSTEM AND METHOD FOR ACTIVE LANE-CHANGING ASSISTANCE FOR A MOTOR VEHICLE

(30) Priorité: 29.12.2010 EP 10290681
(43) Date de publication de la demande: 06.11.2013
(73) Titulaire: Siemens Aktiengesellschaft, 80333 München (DE)
(72) Inventeur: ESSAME, Didier, F-92350 Le Plessis Robinson (FR); EL FASSI, Said, F-91270 Vigneux sur Seine (FR)
(74) Mandataire: Maier, Daniel Oliver
(86) Numéro de dépôt international: PCT/EP2011/066030
(87) Numéro de publication internationale: WO 2012/089357

(56) Documents cités:
- DE-A1- 19 611 379
- DE-A1-102009 033 800
- MACNEILLE P ET AL: "A new technology for a cruise control system", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 5, 6 octobre 2003 (2003-10-06), pages 3341-3345, XP010701927, DOI: 10.1109/VETECF.2003.1286300 ISBN: 978-0-7803-7954-1

## Description

La présente invention concerne un système et une méthode d'aide active au changement de voie pour un véhicule automobile, selon les préambules des revendications 1 et 10.

En particulier, l'invention se rapporte de manière générale à une détection d'objets, en particulier à la détection d'objets adjacents à un véhicule et à une assistance active au changement de voie dudit véhicule, ledit véhicule étant préférentiellement un véhicule automobile autoguidé.

L'intensification du trafic routier, sa complexification, ainsi que d'une part l'évolution des normes de sécurité routière, et d'autre part, des véhicules automobiles ont conduit au développement de nombreux systèmes d'aide à la conduite, comme par exemple l'assistance au freinage, le guidage visuel et/ou auditif, l'anti-patinage, l'aide au changement de voie, ou encore la détection de présence d'objet sur la trajectoire du véhicule. L'aide au changement de voie est généralement basée sur la détection d'objets environnants le véhicule, notamment la détection d'une présence d'autres véhicules, et sur une détermination, en fonction de ladite détection, d'un degré de sécurité lié audit changement de voie. L'aide au changement de voie a notamment été le sujet de plusieurs brevets, par exemple EP1726481B1 qui décrit un système et une méthode d'assistance au changement de file d'un véhicule basée sur une mesure de distance qui permet de détecter si une zone d'insertion latérale est suffisamment libre pour initialiser une manoeuvre de changement de file, EP1577682B1 qui décrit un système de localisation d'objets pour véhicule automobile afin d'identifier des procédures de changement de voie, EP1312506B1 qui décrit une méthode et un procédé d'assistance au conducteur d'un véhicule automobile dans les manoeuvres de changement de voie permettant de prévenir le conducteur d'un risque en sécurité lié audit changement de voie, ou encore la demande de brevet US2003/0025597A1, qui décrit également une détection d'objets adjacents à un véhicule circulant sur une route.

Que le véhicule soit un véhicule automobile à guidage ou pilotage automatique, i.e. un véhicule autonome capable de se déplacer d'une position initiale à une position finale par ses propres moyens, indépendamment d'un conducteur, ou un véhicule automobile conduit par un conducteur, le changement de voie, ou de file, est une opération critique pouvant être soit entièrement menée par un système de contrôle du véhicule automobile à guidage automatique en se basant sur des données fournies par un système d'aide au changement de voie dans le cas dudit véhicule automobile autoguidé, soit menée par le conducteur assisté par ledit système d'aide au changement de voie dans le cas d'un véhicule conduit par un conducteur. Dans tous les cas, le système d'aide au changement de voie permet de sécuriser ledit changement de voie et de fluidifier la manoeuvre de changement de voie.

Malheureusement, les systèmes actuels d'aide au changement de voie ne permettent pas une insertion aisée, d'un véhicule circulant sur une première voie, dans une seconde voie adjacente à ladite première voie, dès que le trafic est intense étant donné que les systèmes d'aide au changement de voie actuels permettent uniquement ledit changement de voie lorsque certaines conditions de sécurité sont respectées, en particulier lorsqu'un espace libre adjacent, sur ladite seconde voie, est disponible pour ledit véhicule. Ainsi, les systèmes actuels d'aide au changement de voie sont des systèmes passifs permettant une insertion d'un véhicule dans une voie adjacente uniquement lorsqu'une place, i.e. un espace suffisant, y est disponible. En d'autres termes, les systèmes actuels d'aide au changement de voie dépendent d'un état du trafic routier. Par exemple, lorsque le trafic est dans un état encombré ou dense, i.e. que la distance inter-véhicule ne permet plus un changement de voie sécurisé, le changement de voie n'est plus possible. Si le trafic est fluide et que la distance inter-véhicule est suffisante, les systèmes d'assistance au changement de voie décrit dans l'état de l'art sont alors aptes à assister ledit changement de voie.

DE 10 2009 033800 décrit une méthode et un système d'aide au changement de voie selon le préambule de la revendication 1 et 10.

Un but de la présente invention est de proposer un système et une méthode d'aide au changement de voie permettant d'aider activement et de manière efficace un véhicule à effectuer un changement de voie, en toute sécurité et quel que soit le trafic sur la voie de destination. En particulier, un autre but de la présente invention est de permettre à un véhicule automobile autoguidé d'initialiser une manoeuvre de changement de voie indépendamment d'un état dudit trafic sur la voie de destination.

Dans ce but, un système et une méthode d'aide au changement de voie pour un véhicule automobile sont proposés par le contenu des revendications 1 et 10.

Un ensemble de sous-revendications présente également des avantages de l'invention.

A partir d'une méthode d'aide au changement de voie pour un véhicule automobile, en particulier autoguidé, destinée à aider ledit véhicule à manoeuvrer un changement de voie d'une position initiale sur une première voie à une position finale sur une seconde voie, ladite méthode comprenant:
- une détermination, en particulier dynamique, et notamment au moyen d'un système géodésique d'un dispositif de localisation, de ladite position initiale dudit véhicule, et une transmission de ladite position initiale à un contrôleur d'un système d'aide au changement de voie destiné à équiper ledit véhicule. En particulier, ladite position initiale est caractérisable par un ensemble de données initiales pouvant en particulier comprendre des coordonnées géodésiques dudit véhicule. En d'autres termes, la méthode comprend en particulier une détermination aux moyens de données géodésiques provenant dudit système géodésique des coordonnées géodésiques de ladite position initiale dudit véhicule qui est une position instantanée absolue, dépendante du temps, du véhicule par rapport à un référentiel terrestre. Ladite détermination de la position initiale dudit véhicule par ledit dispositif de localisation au moyen de son système géodésique permet notamment la localisation dudit véhicule en fonction du temps au moyen d'un système cartographique terrestre. En d'autres termes, ladite position initiale est ainsi la position instantanée absolue dudit véhicule, i.e. sa position par rapport au référentiel terrestre au cours du temps;
la méthode selon l'invention est caractérisée en ce qu'elle comprend:
- au moins une détermination, notamment par un système de détection d'obstacle, d'au moins une position relative d'au moins un autre de véhicule détectable au voisinage dudit véhicule et une transmission de ladite position relative audit contrôleur. Ledit autre véhicule est en particulier détectable au voisinage dudit véhicule par ledit système de détection s'il est situé dans une aire de détection dont la géométrie peut être définie au moyen dudit système de détection d'obstacle. Ladite géométrie de ladite aire de détection est par exemple une ellipse, centrée sur ledit véhicule, d'une longueur par exemple d'au moins 200 mètres ou corrélable à une vitesse de déplacement dudit véhicule, et par exemple d'une largeur de 50 mètres. Ladite position relative dudit autre véhicule est une position instantanée dudit autre véhicule par rapport audit véhicule automobile (ou autrement dit par rapport à un référentiel lié audit véhicule, ledit autre véhicule étant en particulier adjacent audit véhicule automobile, par exemple dans ladite aire de détection sur ladite seconde voie. Ladite position relative peut en particulier être caractérisée par un ensemble de données relatives destinées à localiser ledit autre véhicule par rapport audit véhicule au moyen dudit système cartographique;
- une détermination, en particulier par ledit contrôleur susceptible de comprendre ledit système cartographique, de ladite position finale, en fonction d'un ensemble de données finales, ledit ensemble de données finales comprenant au moins ladite position initiale et étant de plus apte à comprendre au moins une position relative et au moins une donnée de localisation d'un clone virtuel d'un autre véhicule. En particulier, ladite position finale est une position instantanée absolue visée sur ladite seconde voie par ledit véhicule et caractérisable par des coordonnées géodésiques. En d'autres termes, ladite position finale est la position sur la seconde voie déterminable en particulier par ledit contrôleur en fonction d'au moins une des données finales de l'ensemble de données finales, par exemple en fonction de la position relative d'un ou plusieurs autres véhicules et de ladite position initiale, et à laquelle ledit véhicule désire s'insérer, ladite position finale étant définie par rapport au référentiel terrestre en fonction du temps. Ladite position finale peut en particulier être caractérisée par lesdites coordonnées géodésiques et peut être corrélée à chaque donnée finale dudit ensemble de données finales au moyen dudit système cartographique dudit contrôleur;
- une création, en particulier par un dispositif de génération de clone virtuel, d'un clone virtuel dudit véhicule;
- une attribution audit clone virtuel, en particulier par ledit dispositif de génération de clone virtuel, d'une donnée de localisation comprenant au moins ladite position finale, ladite donnée de localisation étant destinée à simuler au moyen dudit clone virtuel une présence d'un véhicule réel factice à ladite position finale. En particulier ladite donnée de localisation permet une localisation dudit clone virtuel à ladite position finale par chaque système d'aide au changement de voie équipant chaque autre véhicule dont la position relative est déterminable afin de simuler au moyen dudit clone virtuel la présence dudit véhicule réel factice à ladite position finale. Ledit clone virtuel est ainsi en particulier caractérisé par une donnée de localisation permettant sa localisation à un emplacement caractérisé par les coordonnées géodésiques de ladite position finale;
- une émission, en particulier par un dispositif de communication dudit système d'aide au changement de voie dudit véhicule, de ladite donnée de localisation, destinée à être réceptionnée par un dispositif de communication d'un système d'aide au changement de voie destiné à équiper ledit autre véhicule. En particulier, la méthode selon l'invention peut comprendre une réception de ladite donnée de localisation par au moins ledit dispositif de communication dudit système d'aide au changement de voie dudit autre véhicule détectable au voisinage dudit véhicule, notamment dès que ledit autre véhicule est au voisinage dudit véhicule, par exemple, lorsqu'il se trouve dans ladite aire de détection;
- une gestion, par chaque contrôleur équipant un système d'aide au changement de voie dont le dispositif de communication a émis ou reçu une donnée de localisation, d'un déplacement du véhicule que le contrôleur équipe en fonction de ladite donnée de localisation.

A partir d'un système d'aide au changement de voie destiné à équiper un véhicule automobile, notamment autoguidé, et à faciliter une manoeuvre de changement de voie dudit véhicule d'une position initiale sur une première voie à une position finale sur une seconde voie, ledit système comprenant:
- un dispositif de localisation, capable de déterminer, en particulier dynamiquement, et notamment au moyen d'un système géodésique, ladite position initiale dudit véhicule et de transmettre ladite position initiale à un contrôleur. Ladite position initiale est une position absolue instantanée dudit véhicule. Elle est en particulier caractérisable par un ensemble de données initiales permettant une représentation de ladite position initiale dans un référentiel terrestre en fonction du temps, par exemple au moyen d'un système cartographique terrestre. Ledit ensemble de données initiales permet en particulier de connaître la position instantanée dudit véhicule afin de pouvoir déterminer en temps réel ladite position initiale en fonction du temps par rapport audit référentiel terrestre. En particulier, ledit ensemble de données initiales comprend au moins des coordonnées géodésiques dudit véhicule, par exemple latitude, longitude, niveau de mer et une donnée temporelle, afin de permettre sa localisation absolue sur une carte, par exemple au moyen dudit système cartographique;
le système selon l'invention est caractérisé en ce qu'il comprend:
- un système de détection d'obstacle capable de déterminer, en particulier dans une aire de détection prédéfinissable et/ou corrélable à une vitesse de déplacement dudit véhicule, au moins une position relative d'au moins un autre véhicule par rapport audit véhicule, en mesurant par exemple une distance séparant ledit véhicule dudit autre véhicule, et un angle délimité par une première droite définie par rapport audit véhicule, par exemple l'axe longitudinal du véhicule, et une seconde droite intersectant ledit véhicule et ledit autre véhicule, ledit système de détection étant de plus capable de transmettre ladite position relative dudit autre véhicule audit contrôleur. Ladite position relative est une position instantanée déterminable en temps réel par ledit système de détection d'obstacle. Elle est notamment caractérisable par un ensemble de données relatives pouvant en particulier comprendre des coordonnées relatives dudit autre véhicule, i.e. les coordonnées en temps réel dudit autre véhicule par rapport audit véhicule, ledit véhicule étant pris comme référence. Ledit système de détection d'obstacle est ainsi capable de détecter en fonction du temps une présence d'au moins un autre véhicule au voisinage dudit véhicule. En particulier, le système de détection d'obstacle est caractérisé par un champ de détection de 360°;
- un contrôleur, comprenant en particulier un système cartographique, une unité de gestion du mouvement et un dispositif de génération de clone virtuel, ledit contrôleur étant d'une part apte à déterminer, notamment en temps réel et au moyen dudit système cartographique, ladite position finale en fonction d'un ensemble de données finales. Ledit ensemble de donnée finale comprend au moins ladite position initiale et est apte à comprendre de plus au moins une position relative et au moins une donnée de localisation d'un clone virtuel d'un autre véhicule, ladite position finale étant déterminable par ledit contrôleur notamment par calcul en temps réel des coordonnées géodésiques absolues de ladite position finale sur ladite seconde voie en fonction desdites données finales. De plus, ledit contrôleur est d'autre part apte à gérer, notamment au moyen de ladite unité de gestion du mouvement, un déplacement dudit véhicule en fonction dudit ensemble de données finales;
- ledit dispositif de génération de clone virtuel capable de créer un clone virtuel dudit véhicule et de simuler au moyen dudit clone virtuel une présence d'un véhicule réel factice à ladite position finale en générant une donnée de localisation dudit clone virtuel dudit véhicule destinée à permettre une localisation dudit clone virtuel à ladite position finale. Ladite donnée de localisation permet notamment ladite localisation dudit clone virtuel à ladite position finale par au moins un autre véhicule susceptible de réceptionner ladite donnée de localisation. Préférentiellement, ladite donnée de localisation est destinée à être émise par un dispositif de communication dudit système d'aide au changement de voie et est apte à être réceptionnée par au moins un autre dispositif de communication pour simuler au moyen dudit clone virtuel une présence dudit véhicule réel factice à ladite position finale. En particulier, ladite donnée de localisation dudit clone virtuel comprend les coordonnées géodésiques absolues instantanées de ladite position finale et permet ainsi la détermination par chaque autre véhicule au voisinage dudit véhicule de la position absolue instantanée dudit clone virtuel par rapport au référentiel terrestre;
- ledit dispositif de communication, par exemple un dispositif de communication radio, capable d'échanger avec au moins un autre dispositif de communication destiné à équiper un système d'aide au changement de voie dudit autre véhicule et avec ledit contrôleur, au moins une donnée de localisation, en particulier au moins ladite donnée de localisation du clone virtuel dudit véhicule, afin de transmettre audit autre dispositif de communication ladite donnée de localisation dudit clone virtuel et/ou de recevoir dudit autre dispositif de communication une donnée de localisation d'un clone virtuel dudit autre véhicule et de transmettre cette donnée de localisation du clone virtuel dudit autre véhicule audit contrôleur. En d'autres termes, le dispositif de communication selon l'invention est capable d'émettre ladite donnée de localisation dudit clone virtuel afin qu'elle soit réceptionnable par au moins un autre dispositif de communication destiné à équiper un système d'aide au changement de voie d'un autre véhicule, et est capable de réceptionner dudit autre dispositif de communication destiné à équiper un autre véhicule au moins une donnée de localisation d'un clone virtuel dudit autre véhicule afin de la transmettre audit contrôleur.

Pour des raisons de clarté, nous allons considérer dans la suite de ce document un ensemble de n véhicules se déplaçant sur une route comprenant plusieurs voies de circulations, tous selon un même sens de déplacement, d'amont en aval. Chaque véhicule dudit ensemble de n véhicules est en particulier équipé dudit système d'aide au changement de voie selon l'invention. Parmi ces n véhicules, un véhicule A est ledit véhicule désirant effectuer un changement de voie. D'autres véhicules appartenant audit ensemble de n véhicules, par exemple les véhicules B-I, sont des véhicules situés au voisinage dudit véhicule A.

Selon la présente invention, le dispositif de localisation permet notamment de localiser en temps réel ledit véhicule A lorsque ce dernier circule sur ladite route en déterminant sa position initiale, i.e. la position absolue dudit véhicule A en fonction du temps. Le dispositif de localisation peut en particulier comprendre ledit système géodésique apte à permettre une géolocalisation dudit véhicule A au moyen par exemple de ses coordonnées géodésiques. La localisation dudit véhicule A est en particulier dynamique en ce qu'elle est continuellement actualisable afin de déterminer avec précision, à tout instant, ladite position initiale dudit véhicule A. Les coordonnées géodésiques caractérisant ladite position initiale dudit véhicule A sont en particulier continuellement actualisables au cours du temps afin de connaître sa position au cours du temps. La position initiale dudit véhicule A est une donnée comprise dans ledit ensemble de données finales destinées à permettre au contrôleur de gérer le déplacement dudit véhicule A, notamment en fonction d'autres données susceptibles d'être comprises dans ledit ensemble de données finales, comme par exemple une donnée de localisation d'un clone virtuel d'un autre véhicule, par exemple d'un des véhicules B-I, et/ou la position relative d'un ou plusieurs autres véhicules appartenant audit ensemble de n véhicules. Avantageusement, la donnée de localisation d'un clone virtuel peut non seulement comprendre ladite position finale, mais aussi en particulier d'autres données utiles à une manoeuvre de changement de voie, comme par exemple au moins une donnée de caractérisation dudit véhicule A: type de véhicule (voiture, motocycle, camion, bus, ...), dimension dudit véhicule (longueur, largeur), etc. Préférentiellement, ladite donnée de localisation dudit clone virtuel est apte à comprendre des coordonnées géodésiques de ladite position finale et des données caractéristiques dudit véhicule désirant effectuer le changement de voie.

Préférentiellement, ledit contrôleur selon l'invention est apte à comprendre un système cartographique permettant de localiser sur une carte ladite position initiale dudit véhicule A, et optionnellement au moins une position relative d'un autre véhicule, en particulier d'un des véhicules B-I, ladite position finale, une donnée de localisation d'un clone virtuel d'un autre véhicule, en particulier d'un des véhicules B-I. Ladite position initiale, ladite position finale et ladite donnée de localisation du clone virtuel d'un autre véhicule sont chacune localisables par ledit contrôleur sur ladite carte, par exemple une carte géographique ou une carte routière dématérialisées, ladite carte étant actualisable, numérisable et embarquable dans le contrôleur dudit système d'aide au changement de voie, en particulier dans ledit système cartographique dudit contrôleur, afin de permettre par exemple une visualisation de ladite position initiale et de ladite position finale dudit véhicule A au cours du temps. En particulier, chaque donnée de localisation d'un clone virtuel d'un autre véhicule réceptionnée par le dispositif de communication du système d'aide au changement de voie dudit véhicule est apte à être traitée par ledit contrôleur afin de simuler ladite présence d'un véhicule réel factice à la position finale dudit autre véhicule. Ledit véhicule réel factice peut être caractérisé par des données figurant dans ladite donnée de localisation dudit clone virtuel dudit autre véhicule, comme par exemple une longueur dudit véhicule réel factice.

Préférentiellement, ladite carte est une représentation virtuelle ou numérique de données concrètes ou abstraites localisées sur le globe terrestre et permettant au moins la géolocalisation dudit véhicule par rapport auxdites données concrètes ou abstraites, par exemple par rapport à une route, une ville, un bâtiment, une montagne, etc. Ladite carte peut notamment comprendre des données géographiques relatives à un itinéraire définissable pour ledit véhicule A, par exemple entre une position de départ et une position d'arrivée, entre lesquelles sont compris un ou plusieurs arrêts ou points de passage. Ainsi, ledit dispositif de localisation permet en particulier au contrôleur de déterminer la position initiale dudit véhicule A sur ladite carte, ou en particulier sur un itinéraire prédéfini dont les données géographiques sont aptes à être représentées sur ladite carte. Avantageusement, ledit système selon l'invention est caractérisé en ce que ledit contrôleur comprend au moins un support de stockage de données destiné à stocker des données de ladite carte, par exemple les données d'une carte géographique numérisée.

Avantageusement, tout autre véhicule appartenant audit ensemble de n véhicules, par exemple un véhicule B équipé dudit système d'aide au changement de voie selon l'invention, est en particulier capable de communiquer avec ledit système d'aide au changement de voie du véhicule A, en particulier si ledit autre véhicule, i.e. le véhicule B, est situé dans ladite aire de détection du système de détection d'obstacle. Avantageusement, ledit véhicule B est capable de recevoir via son dispositif de communication ladite donnée de localisation du clone virtuel dudit véhicule A émise par le dispositif de communication du système d'aide au changement de voie dudit véhicule A, afin que le contrôleur du véhicule B puisse traiter ladite donnée de localisation, notamment en simulant ladite présence dudit véhicule réel factice du véhicule A à l'emplacement de ladite position finale dudit véhicule A. Avantageusement, l'aire de détection du système de détection d'obstacle et une portée de communication du dispositif de communication sont en particulier indépendants l'une de l'autre. En d'autres termes, le dispositif de communication peut, en particulier indépendamment d'une détection d'un véhicule dans ladite aire de détection, émettre ou recevoir une ou plusieurs données de localisation.

De manière préférentielle, ledit contrôleur selon l'invention est capable de corréler chaque position finale avec chaque position initiale, chaque position finale avec chaque position relative, ou encore chaque position finale avec chaque donnée de localisation, lesdites positions finales, initiales, relatives et ladite donnée de localisation étant susceptibles de se trouver dans ledit ensemble de données finales, et ladite corrélation étant destinée à la gestion par ledit contrôleur dudit déplacement du véhicule qu'il équipe. Avantageusement, ledit système de détection d'obstacle est capable de détecter tout objet mobile ou statique se trouvant dans ladite aire de détection afin de permettre une sécurisation dudit déplacement de la position initiale sur la première voie à ladite position finale sur la seconde voie en vérifiant qu'un trajet partant de ladite position initiale et s'achevant à ladite position finale est libre de tout obstacle. En particulier, ledit système de détection est apte à transmettre audit contrôleur un signal d'autorisation de déplacement susceptible de conditionner ledit déplacement dudit véhicule de sa position initiale à sa position finale, en validant par exemple ledit déplacement géré par ledit contrôleur si et seulement si une zone englobant ledit trajet est libre de tout obstacle.

De manière préférentielle, la méthode selon l'invention est caractérisée en ce que ladite gestion dudit déplacement peut en particulier comprendre au moins une gestion d'un déplacement de ladite position initiale à ladite position finale du véhicule dont le système d'aide au changement de voie a émis ladite donnée de localisation, par exemple le véhicule A. Egalement, ladite gestion dudit déplacement peut en particulier comprendre une gestion d'un repositionnement sur ladite seconde voie de chaque autre véhicule situé en amont dudit véhicule réel factice et dont le dispositif de communication du système de changement de voie destiné à l'équiper a reçu ladite donnée de localisation. En d'autres termes, le contrôleur selon l'invention destiné à équiper ledit système d'aide au changement de voie dudit véhicule A est capable de gérer un déplacement du véhicule A de ladite position initiale à ladite position finale en tenant compte desdites données finales, mais aussi, un déplacement dudit véhicule A destiné à créer un trou d'insertion pour un autre véhicule, par exemple pour le véhicule C lorsque ce dernier émet une donnée de localisation via son dispositif de communication. En d'autres termes, ledit contrôleur est en particulier aussi capable de gérer un repositionnement du véhicule qu'il équipe lorsque le dispositif de communication du véhicule que le contrôleur équipe reçoit une donnée de localisation d'un clone virtuel d'un autre véhicule et que ladite donnée de localisation est apte à simuler ladite présence d'un véhicule réel factice sur la même voie que ledit véhicule qu'il équipe, en aval de ce dernier. Ledit repositionnement gérable par ledit contrôleur permet en particulier de créer un trou d'insertion susceptible d'accueillir un véhicule désirant effectuer un changement de voie d'une première voie à une seconde voie. En d'autres termes, ladite gestion dudit déplacement selon l'invention est en particulier apte à créer activement un trou d'insertion à l'emplacement de ladite position finale.

De plus, ladite gestion du déplacement selon la présente invention est aussi en particulier caractérisée par une détermination par ledit contrôleur d'un domaine de mouvement pour ledit véhicule qu'il équipe. Par exemple, le contrôleur dudit système d'aide au changement de voie est notamment capable de gérer chaque déplacement dudit véhicule A en conditionnant ledit déplacement par au moins un critère de déplacement. Le domaine de mouvement est en particulier une aire pour laquelle ledit critère de déplacement est vérifié et dans laquelle ledit véhicule A peut se déplacer en toute sécurité. Ledit critère de déplacement est par exemple une réception dudit signal d'autorisation de déplacement transmis par ledit système de détection d'obstacle dudit véhicule A, ou encore une distance de séparation inter-véhicule sécuritaire, ladite distance de séparation inter-véhicule sécuritaire définissant une valeur minimale de la distance séparant l'arrière d'un premier véhicule de l'avant d'un second véhicule suivant ledit premier véhicule, par exemple l'arrière d'un véhicule C à l'avant d'un véhicule B. Sans restriction, ledit premier véhicule peut être un desdits véhicules appartenant audit ensemble de n véhicules, mais aussi un véhicule réel factice selon l'invention, i.e. un clone virtuel d'un desdits véhicules appartenant audit ensemble de n véhicules. Egalement, ledit second véhicule peut être un desdits véhicules appartenant audit ensemble de n véhicules, mais aussi un véhicule réel factice selon l'invention. Ladite valeur minimale est préférentiellement destinée à prévenir tout risque en sécurité lors d'un changement de voie. Ainsi, la valeur minimale d'une distance de séparation inter-véhicule peut être un critère susceptible d'être imposé à la gestion d'un déplacement dudit véhicule par ledit contrôleur, en particulier applicable à ladite création dudit trou d'insertion. Ladite distance de séparation inter-véhicule peut en particulier être calculée en temps réel par ledit contrôleur à partir desdites données finales et comparée en temps réel à ladite distance de séparation inter-véhicule sécuritaire, afin de permettre un processus logique de décision concernant un respect dudit critère de déplacement basé sur la distance de séparation inter-véhicule. Par ailleurs, ledit système d'aide au changement de voie peut en particulier être apte à coopérer avec un système de prévention de collisions afin de garantir en sécurité le véhicule désirant effectuer ledit changement de voie.

Avantageusement, même si ladite position finale du véhicule A se trouve entre deux autres véhicules, par exemple les véhicules B et C, à un emplacement caractérisé par une distance de séparation inter-véhicule séparant lesdits deux autres véhicules inférieure à ladite distance de séparation inter-véhicule sécuritaire permettant une insertion sécurisée dudit véhicule entre lesdits deux autres véhicules, la réception de ladite donnée de localisation dudit clone virtuel dudit véhicule A par chaque dispositif de communication équipant chaque système d'aide au changement de voie de chacun desdits deux autres véhicules, i.e. desdits véhicules B et C, et d'autres véhicules situés voisinage dudit véhicule, par exemple les véhicules D-I, permet au contrôleur de chaque autre véhicule situé en amont de ladite position finale sur ladite seconde voie, de gérer la position du véhicule qu'il équipe, par exemple en diminuant sa vitesse, afin de repositionner ledit véhicule qu'il équipe en respectant ladite distance de séparation inter-véhicule sécuritaire, créant de la sorte un emplacement pour ledit clone virtuel dudit véhicule A respectant ladite distance de séparation inter-véhicule sécuritaire. Ledit emplacement permet alors au véhicule A désirant effectuer le changement de voie, d'effectuer ledit changement de voie de la position initiale à la position finale en toute sécurité, en prenant la place dudit clone virtuel sur ladite seconde voie.

En particulier, une réception par un même dispositif de communication selon l'invention d'une première et d'une seconde donnée de localisation est apte à déclencher une procédure de sécurisation dudit véhicule, en particulier d'un mouvement dudit véhicule, comme par exemple son changement de voie. Préférentiellement, lorsqu'au moins deux données de localisation de deux clones virtuels différents sont transmises simultanément par le dispositif de communication au contrôleur, ce dernier est apte à différer ladite gestion du déplacement dudit véhicule qu'il équipe ou à ignorer lesdites données de localisation. D'autre part, dans une période débutant avec l'émission par le dispositif de communication d'un véhicule, par exemple le véhicule A, de ladite donnée de localisation et s'achevant par le déplacement dudit véhicule A jusqu'à sa position finale sur ladite seconde voie, chaque contrôleur de chaque autre véhicule au voisinage dudit véhicule A, par exemple les véhicules B-I, est apte à ignorer toute autre transmission par ledit dispositif de communication d'une donnée de localisation émise à son voisinage, afin de garantir un changement de voie sécurisé. Avantageusement, ladite création d'un clone virtuel d'un véhicule est en particulier conditionnable par la réception d'une donnée de localisation d'un clone virtuel d'un autre véhicule. Préférentiellement, durant ladite période débutant avec l'émission par un dispositif de communication d'un véhicule, par exemple le véhicule A, de la donnée de localisation de son clone virtuel et s'achevant par le déplacement dudit véhicule jusqu'à sa position finale sur ladite seconde voie, le dispositif de génération de clone virtuel de chaque autre véhicule au voisinage du véhicule A est apte à différer la création de son clone virtuel.

En outre, le contrôleur selon l'invention est en particulier capable de coopérer avec un système de contrôle ou de pilotage du véhicule qu'il équipe, ledit système de contrôle ou de pilotage étant destiné au pilotage du véhicule qu'il équipe. Ledit système de pilotage est par exemple un système de pilotage automatique du véhicule capable de piloter de manière autonome ledit véhicule, afin notamment de gérer ledit déplacement dudit véhicule. Avantageusement, la coopération dudit contrôleur avec un système de pilotage automatique permet audit contrôleur d'initier et de gérer automatiquement un changement de voie de la position initiale sur la première voie à la position finale sur la seconde voie même si un espace libre adjacent situé à l'emplacement de ladite position finale et destiné à accueillir le véhicule est initialement indisponible pour permettre une insertion sécurisée dudit véhicule à ladite position finale sur la seconde voie. Avantageusement, le système selon l'invention est en particulier capable de prioriser, i.e. de donner une importance préférentielle, à une donnée de localisation provenant d'un type particulier de véhicule, par exemple un véhicule prioritaire par rapport à un ou plusieurs autres véhicules, tel un véhicule d'urgence, de sorte que notamment le déplacement dudit véhicule prioritaire prévale sur un déplacement d'un véhicule non prioritaire, ou en particulier la création d'un trou d'insertion destiné audit véhicule prioritaire prévaut sur un trou d'insertion d'un autre véhicule non prioritaire ou un déplacement d'un autre véhicule non prioritaire.

Finalement, afin de mieux comprendre la présente invention, des exemples de réalisation et d'application sont fournis à l'aide des figures suivantes:
- Figure 1: exemple de réalisation d'un système d'aide au changement de voie selon l'invention;
- Figure 2: exemple de mise en oeuvre d'un changement de voie au moyen d'un système d'aide au changement de voie selon l'invention.

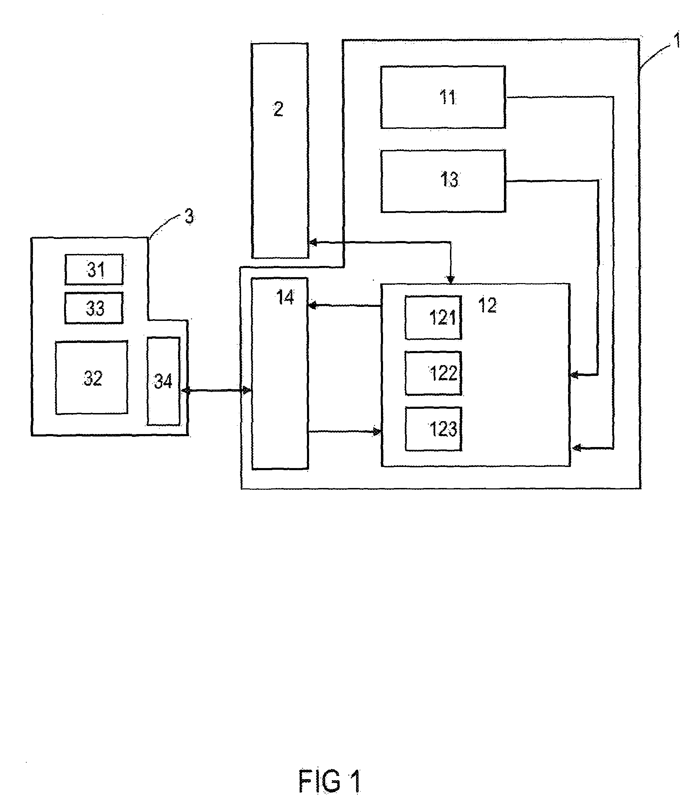

La figure 1 montre un exemple de réalisation d'un système 1 d'aide active au changement de voie selon l'invention, destiné à équiper un véhicule automobile et à faciliter une manoeuvre de changement de voie d'une position initiale sur une première voie à une position finale sur une seconde voie, ledit système 1 comprenant:
- un dispositif de localisation 11 capable de déterminer ladite position initiale dudit véhicule et de transmettre ladite position initiale à un contrôleur 12, ladite position initiale étant une position instantanée dudit véhicule, déterminable en temps réel, par rapport à un référentiel terrestre;
et étant caractérisé en ce qu'il comprend:
- un système de détection d'obstacle 13 capable de déterminer au moins une position relative d'au moins un autre véhicule par rapport audit véhicule, et de transmettre ladite position relative dudit autre véhicule audit contrôleur 12, ladite position relative étant une position instantanée relative dudit autre véhicule, déterminable en temps réel, par rapport à un référentiel lié audit véhicule;
- un contrôleur 12 apte à déterminer ladite position finale en fonction d'un ensemble de données finales comprenant au moins ladite position initiale, ladite position finale étant une position instantanée, déterminable en temps réel, par rapport audit référentiel terrestre;
- un dispositif de génération de clone virtuel 121 capable de créer un clone virtuel dudit véhicule et de simuler au moyen dudit clone virtuel une présence d'un véhicule réel factice à ladite position finale en générant une donnée de localisation dudit clone virtuel dudit véhicule destinée à permettre une localisation dudit clone virtuel à ladite position finale;
- un dispositif de communication 14 capable d'échanger avec au moins un autre dispositif de communication 34 destiné à équiper un système 3 d'aide au changement de voie d'un autre véhicule et avec ledit contrôleur 12, au moins une donnée de localisation.

Ledit véhicule est par exemple ledit véhicule A, et ledit autre véhicule est par exemple un véhicule B appartenant audit ensemble de n véhicules et est donc susceptible d'être équipé par un système 3 d'aide au changement de voie identique au système 1 d'aide au changement de voie équipant ledit véhicule A, et comprenant lui aussi notamment ledit dispositif de communication 34, un contrôleur 32, un système de détection d'obstacle 33, et un dispositif de localisation 31.

En particulier, ledit contrôleur 12 peut en outre comprendre un système cartographique 122, une unité de gestion du mouvement 123 et ledit dispositif de génération de clone virtuel 121. Préférentiellement, ledit système cartographique 122 peut comprendre une carte géographique numérisée embarquable et actualisable permettant de définir un itinéraire entre une position de départ et une position d'arrivée pour ledit véhicule A. Le dispositif de localisation 11 permet en particulier de transmettre en temps réel des coordonnées géodésiques de la position initiale dudit véhicule A au contrôleur, afin que ce dernier puisse localiser en temps réel ledit véhicule A sur ladite carte numérisée, en particulier sur ledit itinéraire.

Préférentiellement, ledit système de détection d'obstacle est apte à détecter un obstacle, mobile ou statique, dans le voisinage dudit véhicule A. Il peut en particulier être caractérisé par un champ de détection de 360 degrés et une portée de détection apte à définir une aire de détection entourant ledit véhicule A. Le dispositif de communication 14 permet en particulier d'échanger avec d'autres véhicules situés dans le voisinage dudit véhicule A, notamment avec ledit véhicule B, au moins ladite donnée de localisation dudit clone virtuel dudit véhicule A. En particulier, ledit dispositif de communication 14 est capable d'émettre ladite donnée de localisation provenant du dispositif de génération de clone virtuel 121 dudit système 1 d'aide au changement de voie dudit véhicule A, et de recevoir au moins une donnée de localisation provenant d'un dispositif de communication 34 d'un système d'aide au changement de voie 3 d'un autre véhicule, par exemple du véhicule B. Le dispositif de communication 14, 34, qui peut être par exemple un dispositif de communication radio, est en particulier capable de communiquer avec un centre de contrôle du trafic capable de contrôler un trafic routier.

Le contrôleur 12 équipant le système d'aide au changement de voie d'un véhicule est en particulier capable de localiser sur ladite carte chacune des positions initiales dudit véhicule, relatives des autres véhicules au voisinage dudit véhicule, et finales dudit véhicule, ainsi que ladite donnée de localisation d'un clone virtuel d'un autre véhicule. A partir dudit ensemble de données finales, ledit contrôleur 12 selon l'invention est en particulier également capable de gérer une création d'un trou d'insertion à ladite position finale sur ladite seconde voie. A cette fin, ladite donnée de localisation dudit clone virtuel est émise par ledit dispositif de communication 14 afin que chaque autre véhicule au voisinage dudit véhicule puisse capter et réceptionner ladite donnée de localisation via son propre dispositif de communication 34.

Selon un autre mode de réalisation de la présente invention, ladite donnée de localisation du clone virtuel d'un véhicule peut être émise par ledit centre de contrôle du trafic afin d'aider ledit véhicule à changer de voie. Ladite donnée de localisation est destinée à être réceptionnée par le dispositif de communication 34 de chaque autre véhicule dans le voisinage du véhicule dont le système 1 d'aide au changement de voie l'a émise. Ladite donnée de localisation est ensuite transmise par ledit dispositif de communication 34 du système 3 d'aide au changement de voie dudit autre véhicule à son contrôleur 32 afin d'être traitée. Si la position finale dudit véhicule, comprise dans ladite donnée de localisation, est située sur la même voie que ledit autre véhicule, i.e. ladite seconde voie, et si ladite position finale est située en aval dudit autre véhicule, ou en particulier si le véhicule réel factice simulé par ladite donnée de localisation est le véhicule précédant directement ledit autre véhicule (Il est supposé que l'ensemble des n véhicules circulent dans un même sens, d'amont vers aval, sur plusieurs voies de circulation adjacentes), alors le contrôleur dudit système 3 d'aide au changement de voie dudit autre véhicule est capable de gérer un déplacement dudit autre véhicule apte à créer un trou d'insertion pour ledit véhicule désirant effectuer le changement de voie. Ledit trou d'insertion peut en particulier comprendre des caractéristiques corrélables à d'autres données comprises dans ladite donnée de localisation du clone virtuel dudit véhicule, comme par exemple une longueur dudit véhicule. De manière préférentielle, ledit contrôleur 32 est apte à gérer une diminution de la vitesse dudit autre véhicule afin de créer ledit trou d'insertion entre ledit autre véhicule et un véhicule qui le précédait sur sa voie de circulation. Avantageusement, ledit système de détection d'obstacle 13, 33 équipant chaque système 1, 3 d'aide au changement de voie destiné à équiper un véhicule permet en particulier de maintenir une distance de séparation inter-véhicule sécuritaire, de sorte que lorsqu'un véhicule ralentit, par exemple pour créer ledit trou d'insertion, les autres véhicules situés sur la même voie que ledit véhicule qui a ralenti et en amont de ce dernier, sont aptes à maintenir ladite distance de séparation inter-véhicule sécuritaire.

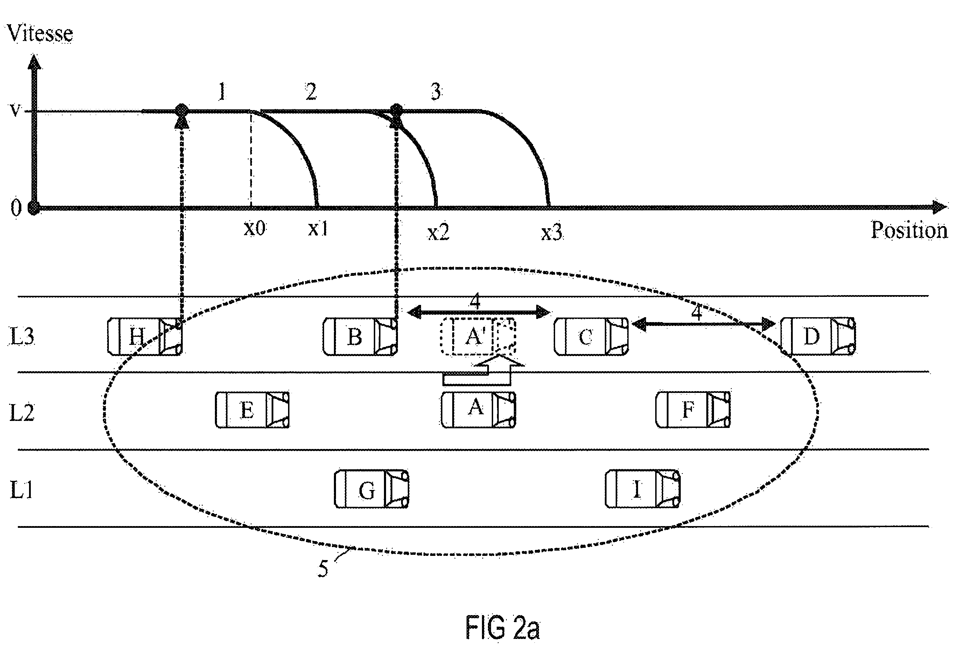

Les figures 2a à 2d permettent de mieux illustrer une mise en oeuvre d'une manoeuvre de changement de voie au moyen dudit système d'aide active au changement de voie pour véhicule selon l'invention. Chacune des figures 2a-2d présente de façon identique une partie d'une route comprenant trois voies, respectivement une voie de droite L1, une voie centrale L2 et une voie de gauche L3, la voie de droite L1 étant située sur la rive droite de la voie centrale L2 par rapport à un observateur tourné vers l'aval et la voie de gauche étant située sur la rive gauche de la voie centrale par rapport au même observateur, et sur laquelle circulent ledit ensemble de n véhicules, parmi lesquels les véhicules A-I sont représentés. Chaque véhicule A-I se déplace d'amont vers aval.

Un graphique comprenant en abscisse un axe indiquant la position et en ordonnée un axe indiquant la vitesse présente trois profils de vitesse sécuritaires, respectivement un premier profil 1, un second profil 2, et un troisième profil 3, chacun en fonction de la position, respectivement x1, x2, x3 de l'arrière d'un véhicule, respectivement B, A, C. Chacun de ces profils comprend en particulier une partie rectiligne à vitesse constante v, suivie d'une décroissance de la vitesse afin d'atteindre une vitesse nulle. En considérant par exemple le véhicule H, la vitesse de ce dernier est caractérisable par le premier profil 1 de vitesse sécuritaire indiquant que le véhicule H peut se rapprocher à vitesse constante v du véhicule B jusqu'à la position x0 déterminant une distance de séparation inter-véhicule égale à x1-x0, x1 étant la position de l'arrière du véhicule B. Si le véhicule H dépasse ladite position x0, il devra alors décélérer selon le premier profil 1 de vitesse donné en fonction des positions comprises entre la position x0 et la position x1, afin d'obtenir une vitesse nulle en x1, i.e. à l'arrière du véhicule B. Similairement, chaque véhicule A-I peut être caractérisé par un profil de vitesse tel que celui décrit par le premier profil 1 de vitesse pour le véhicule H par rapport à un véhicule qui le précède.

La figure 2a présente un exemple de situation de trafic routier dans lequel le véhicule A désire effectuer un changement de voie d'une position initiale d'abscisse x2 sur une première voie, i.e. la voie médiane L2, à une position finale d'abscisse x2 sur une seconde voie, i.e. la voie L3. Chaque véhicule A-I du présent exemple comprend ledit système d'aide active au changement de voie selon l'invention, tel que décrit en Fig. 1. Chaque véhicule A-I est ainsi équipé dudit système de détection d'obstacle selon l'invention. Considérant le véhicule A, ledit système de détection d'obstacle permet en particulier audit véhicule A de détecter dans une aire de détection 5 d'autres véhicules, par exemple les véhicules B-I situés dans le voisinage dudit véhicule A. Ledit système de détection d'obstacle permet audit véhicule A de déterminer en particulier la position desdits autres véhicules B-I par rapport à sa position, en d'autres termes, leur position relative. Le contrôleur dudit système d'aide active au changement de voie permet de déterminer, notamment en sécurité, un domaine de mouvement pour ledit véhicule A, notamment en fonction de la position relative desdits autres véhicules B-I. Chaque véhicule A-I peut ainsi être conscient, via le système de détection d'obstacle équipant son système d'aide active au changement de voie, des véhicules se trouvant dans son voisinage. Avantageusement, chaque véhicule A-I équipé dudit système d'aide active au changement de voie est en particulier capable de connaître une position d'un clone virtuel d'un autre véhicule sur ladite route. En effet, si le véhicule A décide de changer de voie pour aller de ladite première voie à ladite seconde voie, il va, en accord avec la méthode selon l'invention, déterminer au moyen du contrôleur équipant son système d'aide active au changement de voie, une position finale d'abscisse x2 sur ladite seconde voie, notamment en fonction de sa position initiale d'abscisse x2 sur la première voie, et des positions relatives des véhicules B-I situés dans son voisinage. Une fois la position finale déterminée, un clone virtuel A' dudit véhicule A sera créé par ledit dispositif de génération de clone virtuel et une donnée de localisation comprenant ladite position finale sera attribuée audit clone virtuel A'.

Ladite donnée de localisation du clone virtuel A' dudit véhicule A émise par son dispositif de communication est apte à être réceptionnée par le dispositif de communication du système d'aide au changement de voie de chaque autre véhicule B-I situés dans le voisinage dudit véhicule A, afin d'être traitée par leur contrôleur respectif. Le contrôleur dudit système d'aide active au changement de voie selon l'invention permet en particulier non seulement de déterminer, notamment en sécurité, un domaine de mouvement pour le véhicule qu'il équipe en fonction de la position relative de véhicules se trouvant dans son voisinage, mais aussi en fonction de la position d'un clone virtuel d'un véhicule situé dans son voisinage, déductible de ladite donnée de localisation dudit clone virtuel dudit véhicule situé dans son voisinage.

Avantageusement, la gestion par ledit contrôleur d'un déplacement du véhicule qu'il équipe en fonction d'une position relative d'un autre véhicule diffère de la gestion d'un déplacement du véhicule qu'il équipe en fonction d'une donnée de localisation d'un clone virtuel émise par le dispositif de communication d'un véhicule situé dans son voisinage. En effet, considérons l'exemple des véhicules A, B et H, le véhicule A désirant effectuer un changement de voie et les véhicules B et H circulant sur la même voie, le véhicule H suivant directement le véhicule B. Dans ce cas, la gestion par le contrôleur du déplacement du véhicule A en fonction de la position relative d'un autre véhicule, i.e. le véhicule B, est apte à être conditionnée par au moins un critère de déplacement, par exemple, ladite distance de séparation inter-véhicule sécuritaire 4 définissant une valeur minimale de la distance séparant l'arrière de l'avant de deux véhicules consécutifs, que ce soient des véhicules appartenant audit ensemble de n véhicules ou des véhicules réels factices. Le contrôleur est en particulier apte à calculer la distance de séparation inter-véhicule en temps réel à partir desdites données finales et à la comparer à ladite distance de séparation inter-véhicule sécuritaire.

Si cette distance de séparation inter-véhicule est une distance de séparation calculée par un contrôleur équipant le système d'aide au changement de voie d'un véhicule, à partir d'une position relative d'un véhicule qui précède ledit véhicule, et si cette distance de séparation devient inférieure à ladite distance de séparation inter-véhicule sécuritaire, alors ledit contrôleur est apte à commander à un système de pilotage dudit véhicule un freinage d'urgence dudit véhicule afin d'éviter toute collision avec le véhicule qui le précède. C'est le cas pour le contrôleur du véhicule H qui est apte à calculer la distance séparant le véhicule H qu'il équipe du véhicule B qui le précède à partir desdites donnes finales, notamment relatives à la position relative du véhicule B. Si la distance séparant le véhicule H du véhicule B devient inférieure à ladite distance de séparation inter-véhicule sécuritaire, alors le contrôler du véhicule H est apte à commander au système de pilotage dudit véhicule H une décélération tel que présentée par le premier profil de vitesse 1 afin d'avoir une vitesse nulle en position x1, évitant ainsi une collision avec ledit véhicule B.

Si cette distance de séparation inter-véhicule est une distance de séparation calculée par un contrôleur équipant le système d'aide au changement de voie d'un véhicule à partir d'une donnée de localisation d'un clone virtuel d'un véhicule et si ledit clone virtuel précède ledit véhicule et si cette distance de séparation est inférieure à ladite distance de séparation inter-véhicule sécuritaire, alors ledit contrôleur est apte à ignorer ledit clone virtuel afin d'éviter un freinage d'urgence dudit véhicule. C'est le cas pour le contrôleur du véhicule B. Le clone virtuel A' du véhicule A se situe à une distance du véhicule B inférieure à ladite distance de séparation inter-véhicule sécuritaire 4. Dès lors, la présente invention permet avantageusement d'éviter un freinage d'urgence du véhicule B en autorisant ledit contrôleur du véhicule B à ignorer ledit clone virtuel A' dudit véhicule A, ce qui permet au véhicule B de poursuivre sa route à vitesse constante v et en maintenant une distance le séparant du véhicule qui le précède C respectant ladite distance de séparation inter-véhicule sécuritaire.

Si cette distance de séparation inter-véhicule est une distance de séparation calculée par un contrôleur équipant le système d'aide au changement de voie d'un véhicule à partir d'une donnée de localisation d'un clone virtuel d'un véhicule et si ledit clone virtuel précède ledit véhicule et si cette distance de séparation est supérieure ou égale à ladite distance de séparation inter-véhicule sécuritaire, alors ledit contrôleur est apte à commander à un système de pilotage dudit véhicule de maintenir au moins ladite distance de séparation inter-véhicule sécuritaire entre le véhicule qu'il équipe et ledit clone virtuel dudit véhicule afin de permettre au véhicule ayant émis ledit clone virtuel d'effectuer son changement de voie. C'est le cas du contrôleur du véhicule H par rapport au clone virtuel A' du véhicule A. Comme la distance entre le véhicule H et le clone virtuel A' est supérieure ou égale à ladite distance de séparation inter-véhicule sécuritaire, le contrôleur du véhicule H est capable de coopérer avec le système de pilotage dudit véhicule H afin de maintenir une distance entre lui et ledit clone virtuel A' du véhicule A satisfaisant audit critère de déplacement basé sur la distance de séparation inter-véhicule sécuritaire.

Ainsi, lorsqu'une donnée de localisation d'un clone virtuel est émis par ledit véhicule A, chaque système d'aide au changement de voie équipant chaque véhicule B-I dans le voisinage dudit véhicule A est apte à recevoir ladite donnée de localisation. Si le contrôleur dudit système de changement de voie d'un véhicule situé dans le voisinage du véhicule A détermine que la distance de séparation inter-véhicule séparant le véhicule qu'il équipe du clone virtuel A' est inférieure à la distance de séparation inter-véhicule sécuritaire, alors ledit clone virtuel est ignoré. Par contre, si le contrôleur dudit système de changement de voie d'un véhicule situé dans le voisinage du véhicule A détermine que la distance de séparation inter-véhicule séparant le véhicule qu'il équipe du clone virtuel est supérieure ou égale à la distance de séparation inter-véhicule sécuritaire, alors la distance de séparation entre ledit clone virtuel et ledit véhicule est maintenue à une valeur au moins égale à ladite distance de séparation inter-véhicule sécuritaire.

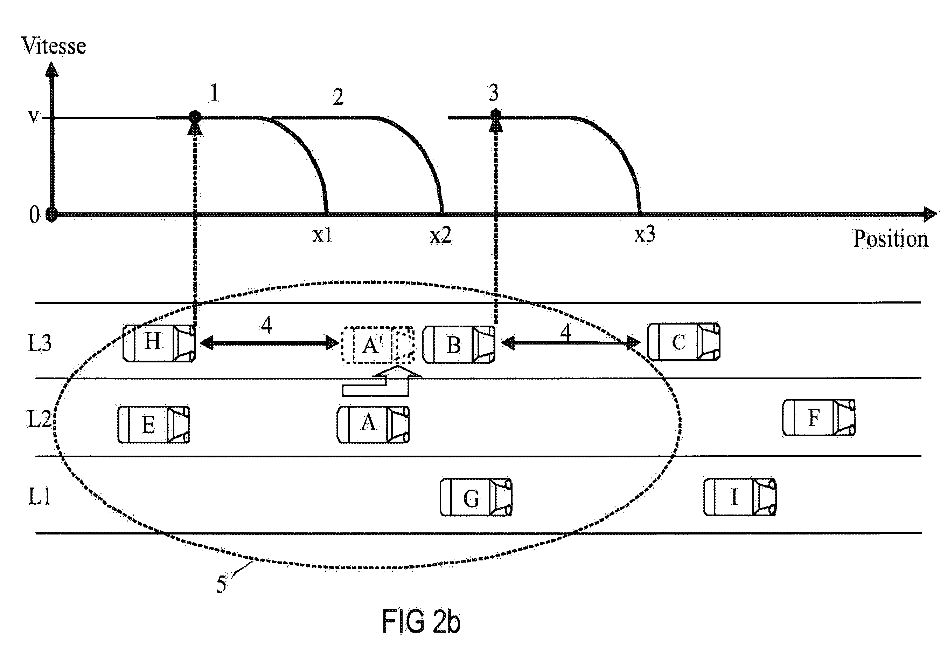

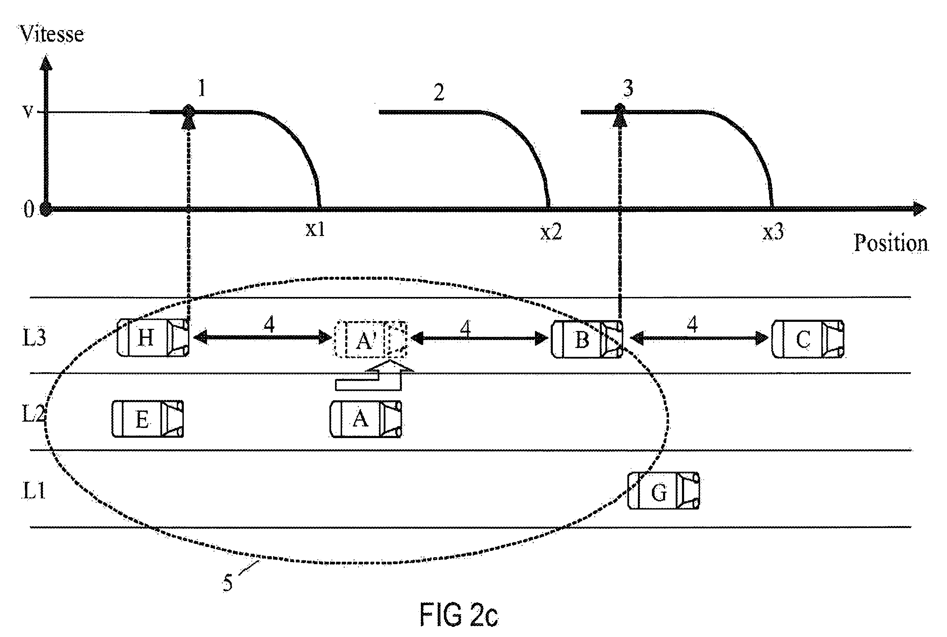

De plus, et comme présenté en Figure 2b, ledit contrôleur équipant le système d'aide au changement de voie dudit véhicule A désirant effectuer ledit changement de voie est en particulier apte à coopérer avec un système de pilotage dudit véhicule A afin de maintenir une distance de séparation inter-véhicule entre son clone virtuel A' et des véhicules H, B qui précèdent et suivent directement son clone virtuel A' supérieure ou égale à la distance de séparation inter-véhicule sécuritaire 4. Avantageusement, ledit contrôleur du véhicule A est en particulier capable de commander au système de pilotage du véhicule qu'il équipe un ralentissement dudit véhicule A et de corréler ledit ralentissement dudit véhicule A à une modification de ladite position finale dudit véhicule A sur ladite seconde voie, et donc également une modification de la donnée de localisation du clone virtuel A' dudit véhicule A, afin de créer un espace libre entre ledit clone virtuel A et un véhicule B qui précède ledit clone virtuel A' sur ladite seconde voie respectant ladite distance de séparation inter-véhicule sécuritaire 4, comme illustré en Fig. 2c. A cette fin, ledit contrôleur est capable de corréler ladite position finale à la position relative d'un véhicule directement en aval de ladite position finale afin de gérer un déplacement dudit véhicule qu'il équipe par commande du système de pilotage dudit véhicule qu'il équipe ou coopération avec ledit système de pilotage.

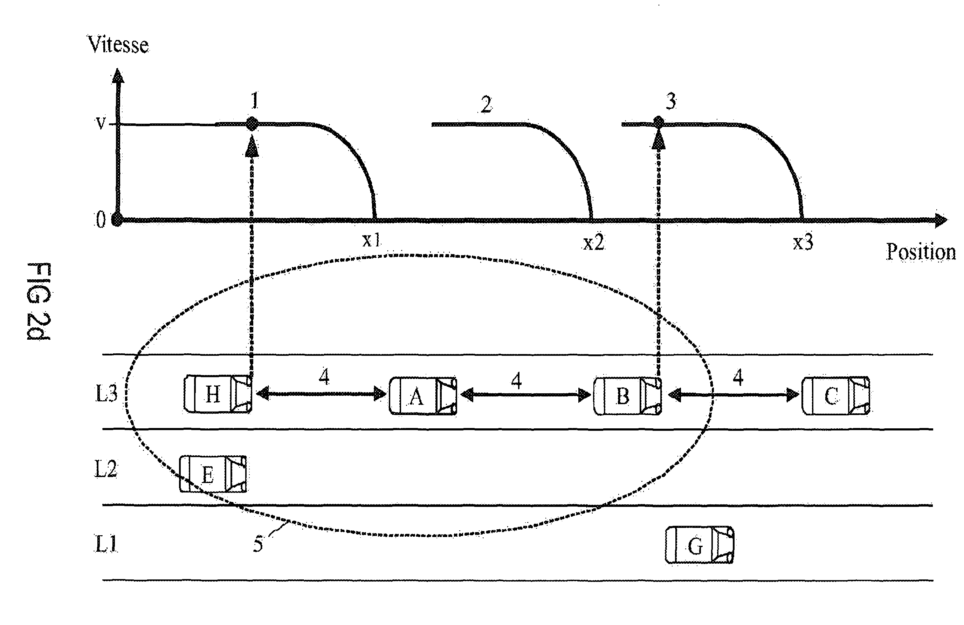

Une fois que la distance séparant ledit clone virtuel A' du véhicule B qui le précède et du véhicule H qui le suit est supérieure ou égale à ladite distance inter-véhicule sécuritaire, ledit contrôleur est apte à coopérer avec ou à commander ledit système de pilotage afin d'effectuer le changement de voie permettant audit véhicule A de passer de sa position initiale sur ladite première voie L2 à ladite position finale sur ladite seconde voie L3, tel qu'illustré en Fig. 2d.

En résumé, la méthode et le système d'aide active au changement de voie selon l'invention présentent plusieurs avantages par rapport aux méthodes et systèmes d'aide au changement de voie existant en ce que:
- ils assurent une sécurisation du changement de voie;
- ils permettent une mise en oeuvre d'un changement de voie indépendamment d'une disponibilité d'un espace libre adjacent et indépendamment d'un état du trafic;
- ils permettent une création active d'un espace libre adjacent en créant activement un trou d'insertion pour un véhicule désirant effectuer un changement de voie;
- ils permettent une mise en oeuvre autonome d'un changement de voie d'un véhicule;
- ils permettent de mettre en place une hiérarchie dans la création des trous d'insertion. Par exemple, certains véhicules peuvent en particulier être optionnellement programmés afin d'être des véhicules prioritaires capables d'ignorer systématiquement des clones qui sont devant eux tout en étant capables d'en créer. Une application intéressante serait dès lors en particulier une priorisation des véhicules d'urgence qui dans ce cas auraient toujours la priorité sur d'autres véhicules pour changer de file, sans être gêner par un autre véhicule non prioritaire.

## Revendications

1. Méthode d'aide au changement de voie pour un véhicule automobile destinée à aider activement ledit véhicule à manoeuvrer un changement de voie d'une position initiale sur une première voie à une position finale sur une seconde voie, ladite méthode comprenant:
- une détermination de ladite position initiale dudit véhicule et une transmission de ladite position initiale à un contrôleur (12) destiné à équiper un système (1) d'aide au changement de voie dudit véhicule;
- au moins une détermination d'au moins une position relative d'au moins un autre véhicule détectable au voisinage dudit véhicule, et une transmission de ladite position relative audit contrôleur (12);
- une détermination de ladite position finale en fonction d'un ensemble de données finales comprenant au moins ladite position initiale et apte à comprendre au moins ladite position relative;
- une création d'un clone virtuel dudit véhicule;
- une attribution audit clone virtuel d'une donnée de localisation comprenant au moins ladite position finale, ladite donnée de localisation étant destinée à simuler au moyen dudit clone virtuel une présence d'un véhicule réel factice à ladite position finale;
- une gestion, par chaque contrôleur (12, 32) équipant un système (1, 3) d'aide au changement de voie dont le dispositif de communication (14, 34) a émis ou reçu une donnée de localisation, d'un déplacement du véhicule que le contrôleur (12, 32) équipe en fonction de ladite donnée de localisation;
est **caractérisée en ce qu'**elle comprend
- une émission, par un dispositif de communication (14) dudit système (1) d'aide au changement de voie dudit véhicule, de ladite donnée de localisation destinée à être réceptionnée par un dispositif de communication (34) d'un système (3) d'aide au changement de voie destiné à équiper ledit autre véhicule.

2. Méthode selon la revendication 1, **caractérisée en ce que** ledit ensemble de données finales est apte à comprendre une donnée de localisation d'un clone virtuel d'un autre véhicule.

3. Méthode selon une des revendications 1 ou 2, **caractérisée en ce que** ladite donnée de localisation dudit clone virtuel est apte à comprendre des coordonnées géodésiques de ladite position finale et des données caractéristiques dudit véhicule désirant effectuer le changement de voie.

4. Méthode selon une des revendications 1 à 3, **caractérisée en ce que** ladite gestion dudit déplacement comprend une gestion d'un déplacement de ladite position initiale à ladite position finale du véhicule dont le système (1) d'aide au changement de voie a émis ladite donnée de localisation.

5. Méthode selon une des revendications 1 à 4, **caractérisée en ce que** ladite gestion dudit déplacement comprend une gestion d'un repositionnement sur ladite seconde voie de chaque autre véhicule situé en amont dudit véhicule réel factice et dont le dispositif de communication (34) du système (3) de changement de voie destiné à l'équiper a reçu ladite donnée de localisation.

6. Méthode selon une des revendications 1 à 5 **caractérisée en ce que** ladite gestion est apte à créer un trou d'insertion à l'emplacement de ladite position finale.

7. Méthode selon une des revendications 1 à 6 **caractérisée en ce qu'**une réception d'une première et d'une seconde donnée de localisation par un même dispositif de communication (14, 34) d'un système (1, 3) d'aide au changement de voie d'un véhicule est apte à déclencher une procédure de sécurisation dudit véhicule.

8. Méthode selon une des revendications 1 à 7, **caractérisée en ce que** ladite création est conditionnable par une réception d'une donnée de localisation d'un clone virtuel d'un autre véhicule.

9. Méthode selon une des revendications 1 à 8, **caractérisée en ce que** ladite gestion comprend une détermination d'un domaine de mouvement pour dudit véhicule.

10. Système (1) d'aide au changement de voie destiné à équiper un véhicule automobile et à faciliter une manoeuvre de changement de voie d'une position initiale sur une première voie à une position finale sur une seconde voie, ledit système comprenant:
- un dispositif de localisation (11) capable de déterminer ladite position initiale dudit véhicule et de transmettre ladite position initiale à un contrôleur (12);
- un système de détection d'obstacle (13) capable de déterminer au moins une position relative d'au moins un autre véhicule par rapport audit véhicule, et de transmettre ladite position relative dudit autre véhicule audit contrôleur (12);
- un contrôleur (12) apte à déterminer ladite position finale en fonction d'un ensemble de données finales comprenant au moins ladite position initiale;
- un dispositif de génération de clone virtuel (121) capable de créer un clone virtuel dudit véhicule et de simuler au moyen dudit clone virtuel une présence d'un véhicule réel factice à ladite position finale en générant une donnée de localisation dudit clone virtuel dudit véhicule destinée à permettre une localisation dudit clone virtuel à ladite position finale;
et étant **caractérisé en ce qu'**il comprend:
- un dispositif de communication (14) capable d'échanger avec au moins un autre dispositif de communication (34) destiné à équiper un système (3) d'aide au changement de voie d'un autre véhicule et avec ledit contrôleur (12), au moins une donnée de localisation.

11. Système selon la revendication 10, **caractérisé en ce que** ledit contrôleur (12) comprend un système cartographique (122), une unité de gestion du mouvement (123) et ledit dispositif de génération de clone virtuel (121).

12. Système selon une des revendications 10 ou 11, **caractérisé en ce que** ledit contrôleur (12) est apte à gérer un déplacement dudit véhicule en fonction dudit ensemble de données finales.

13. Système selon une des revendications 10 à 12, **caractérisé en ce que** ladite donnée de localisation comprend des coordonnées géodésiques de ladite position finale et des données caractéristiques dudit véhicule.

14. Système selon une des revendications 10 à 13, **caractérisé en ce que** ledit contrôleur (12) est apte à coopérer avec un système de contrôle dudit véhicule destiné au pilotage dudit véhicule.

15. Système selon une des revendications 12 à 14, **caractérisé en ce que** ledit contrôleur (12) est apte à gérer un déplacement dudit véhicule de ladite position initiale à ladite position finale.

## Patentansprüche

1. Verfahren zur Spurwechselhilfe für ein Kraftfahrzeug, das dazu bestimmt ist, dieses Fahrzeug aktiv dabei zu unterstützen, einen Spurwechsel von einer Anfangsposition auf einer ersten Spur zu einer Endposition auf einer zweiten Spur durchzuführen, wobei das Verfahren umfasst:
- eine Bestimmung der Anfangsposition des Fahrzeugs und eine Übertragung dieser Anfangsposition zu einer Steuereinrichtung (12), die dazu bestimmt ist, in einem Spurwechselhilfesystem (1) des Fahrzeugs eingesetzt zu werden;
- wenigstens eine Bestimmung wenigstens einer relativen Position wenigstens eines anderen Fahrzeugs, das in der Nähe des Fahrzeugs erkennbar ist, und eine Übertragung dieser relativen Position zu der Steuereinrichtung (12);
- eine Bestimmung der Endposition in Abhängigkeit von einer Gesamtheit von Enddaten, die wenigstens die Anfangsposition umfasst und geeignet ist, wenigstens die relative Position zu umfassen;
- eine Erzeugung eines virtuellen Klons des Fahrzeugs;
- eine Zuweisung eines Lokalisierungs-Datenelements zu dem virtuellen Klon, welches wenigstens die Endposition umfasst, wobei das Lokalisierungs-Datenelement dazu bestimmt ist, mittels dieses virtuellen Klons eine Anwesenheit eines imitierten realen Fahrzeugs an der Endposition zu simulieren;
- ein Management - durch jede Steuereinrichtung (12, 32), mit der ein Spurwechselhilfesystem (1, 3) ausgestattet ist, dessen Kommunikationsvorrichtung (14, 34) ein Lokalisierungs-Datenelement gesendet oder empfangen hat - einer Ortsveränderung des Fahrzeugs, das mit der Steuereinrichtung (12, 32) ausgestattet ist, in Abhängigkeit von dem Lokalisierungs-Datenelement;
**dadurch gekennzeichnet, dass** es umfasst:
- eine Aussendung - durch eine Kommunikationsvorrichtung (14) des Spurwechselhilfesystems (1) des Fahrzeugs - des Lokalisierungs-Datenelements, das dazu bestimmt ist, durch eine Kommunikationsvorrichtung (34) eines Spurwechselhilfesystems (3) empfangen zu werden, das dazu bestimmt ist, in dem anderen Fahrzeug eingesetzt zu werden.

2. Verfahren nach Anspruch 1, **dadurch gekennzeichnet, dass** die Gesamtheit von Enddaten geeignet ist, ein Lokalisierungs-Datenelement eines virtuellen Klons eines anderen Fahrzeugs zu umfassen.

3. Verfahren nach einem der Ansprüche 1 oder 2, **dadurch gekennzeichnet, dass** das Lokalisierungs-Datenelement des virtuellen Klons geeignet ist, geodätische Koordinaten der Endposition und charakteristische Daten des Fahrzeugs, welches den Spurwechsel durchführen möchte, zu umfassen.

4. Verfahren nach einem der Ansprüche 1 bis 3, **dadurch gekennzeichnet, dass** das Management der Ortsveränderung ein Management einer Ortsveränderung des Fahrzeugs, dessen Spurwechselhilfesystem (1) das Lokalisierungs-Datenelement gesendet hat, von der Anfangsposition zu der Endposition umfasst.

5. Verfahren nach einem der Ansprüche 1 bis 4, **dadurch gekennzeichnet, dass** das Management der Ortsveränderung ein Management einer Umpositionierung jedes anderen Fahrzeugs auf der zweiten Spur umfasst, das sich weiter vorn als das imitierte reale Fahrzeug befindet und dessen Kommunikationsvorrichtung (34) des Spurwechselhilfesystems (3), das dazu bestimmt ist, in ihm eingesetzt zu werden, das Lokalisierungs-Datenelement empfangen hat.

6. Verfahren nach einem der Ansprüche 1 bis 5, **dadurch gekennzeichnet, dass** das Management geeignet ist, am Ort der Endposition eine Lücke zum Hineinwechseln zu erzeugen.

7. Verfahren nach einem der Ansprüche 1 bis 6, **dadurch gekennzeichnet, dass** ein Empfang eines ersten und eines zweiten Lokalisierungs-Datenelements durch ein und dieselbe Kommunikationsvorrichtung (14, 34) eines Spurwechselhilfesystems (1, 3) eines Fahrzeugs geeignet ist, eine Sicherungsprozedur dieses Fahrzeugs auszulösen.

8. Verfahren nach einem der Ansprüche 1 bis 7, **dadurch gekennzeichnet, dass** die Erzeugung an die Bedingung geknüpft werden kann, dass ein Empfang eines Lokalisierungs-Datenelements eines virtuellen Klons eines anderen Fahrzeugs erfolgt.

9. Verfahren nach einem der Ansprüche 1 bis 8, **dadurch gekennzeichnet, dass** das Management eine Bestimmung eines Bewegungsbereichs für das Fahrzeug umfasst.

10. Spurwechselhilfesystem (1), das dazu bestimmt ist, in einem Kraftfahrzeug eingesetzt zu werden und ein Spurwechselmanöver von einer Anfangsposition auf einer ersten Spur zu einer Endposition auf einer zweiten Spur zu erleichtern, wobei das System umfasst:
- eine Lokalisierungsvorrichtung (11), die in der Lage ist, die Anfangsposition des Fahrzeugs zu bestimmen und die Anfangsposition zu einer Steuereinrichtung (12) zu übertragen;
- ein Hinderniserkennungssystem (13), das in der Lage ist, wenigstens eine relative Position wenigstens eines anderen Fahrzeugs in Bezug auf das Fahrzeug zu bestimmen und diese relative Position dieses anderen Fahrzeugs zu der Steuereinrichtung (12) zu übertragen;
- eine Steuereinrichtung (12), die geeignet ist, die Endposition in Abhängigkeit von einer Gesamtheit von Enddaten zu bestimmen, die wenigstens die Anfangsposition umfassen;
- eine Vorrichtung zur Erzeugung eines virtuellen Klons (121), die in der Lage ist, einen virtuellen Klon des Fahrzeugs zu erzeugen und mittels dieses virtuellen Klons eine Anwesenheit eines imitierten realen Fahrzeugs an der Endposition zu simulieren, indem sie ein Lokalisierungs-Datenelements des virtuellen Klons des Fahrzeugs erzeugt, das dazu bestimmt ist, eine Lokalisierung des virtuellen Klons an der Endposition zu ermöglichen;
und **dadurch gekennzeichnet ist, dass** es umfasst:
- eine Kommunikationsvorrichtung (14), die in der Lage ist, mit wenigstens einer anderen Kommunikationsvorrichtung (34), die dazu bestimmt ist, in einem Spurwechselhilfesystems (3) eines anderen Fahrzeugs eingesetzt zu werden, und mit der Steuereinrichtung (12) wenigstens ein Lokalisierungs-Datenelement auszutauschen.

11. System nach Anspruch 10, **dadurch gekennzeichnet, dass** die Steuereinrichtung (12) ein kartographisches System (122), eine Management-Einheit der Bewegung (123) und die Vorrichtung zur Erzeugung eines virtuellen Klons (121) umfasst.

12. System nach einem der Ansprüche 10 oder 11, **dadurch gekennzeichnet, dass** die Steuereinrichtung (12) geeignet ist, eine Ortsveränderung des Fahrzeugs in Abhängigkeit von der Gesamtheit von Enddaten zu managen.

13. System nach einem der Ansprüche 10 bis 12, **dadurch gekennzeichnet, dass** das Lokalisierungs-Datenelement geodätische Koordinaten der Endposition und charakteristische Daten des Fahrzeugs umfasst.

14. System nach einem der Ansprüche 10 bis 13, **dadurch gekennzeichnet, dass** die Steuereinrichtung (12) geeignet ist, mit einem Steuerungssystem des Fahrzeugs zusammenzuwirken, das zum Lenken des Fahrzeugs bestimmt ist.

15. System nach einem der Ansprüche 12 bis 14, **dadurch gekennzeichnet, dass** die Steuereinrichtung (12) geeignet ist, eine Ortsveränderung des Fahrzeugs von der Anfangsposition zu der Endposition zu managen.

## Claims

1. Method for lane-changing assistance for a motor vehicle designed to assist said vehicle actively to manoeuvre a change of lane from an initial position on a first lane to a final position on a second lane, said method comprising:
- a determination of said initial position of said vehicle and a transmission of said initial position to a controller (12) designed to be provided on a lane-changing assistance system (1) of said vehicle:
- at least one determination of at least one relative position of at least one other vehicle which is detectable in the vicinity of said vehicle and a transmission of said relative position to said controller (12);
- a determination of said final position as a function of a set of final data comprising at least said initial position and being capable of comprising at least said relative position;
- a creation of a virtual clone of said vehicle;
- an attribution to said virtual clone of a localisation datum comprising at least said final position, said localisation datum being designed to simulate by means of said virtual clone the presence of a dummy real vehicle in said final position;
- a management, by each controller (12, 32) provided in a lane-changing assistance system (1, 3) of which the communication device (14, 34) has emitted or received a localisation datum, of a displacement of the vehicle provided with the controller (12, 32) as a function of said localisation datum;
is **characterised in that** it comprises
- an emission, by a communication device (14) of said lane-changing assistance system (1) of said vehicle, of said localisation datum designed to be received by a communication device (34) of a lane-changing assistance system (3) designed to be provided on said other vehicle;

2. Method according to claim 1, **characterised in that** said set of final data is capable of comprising a localisation datum of a virtual clone of another vehicle.

3. Method according to one of claims 1 or 2, **characterised in that** said localisation datum of said virtual clone is capable of comprising the geodesic coordinates of said final position and characteristic data of said vehicle wishing to perform the change of lane.

4. Method according to one of claims 1 to 3, **characterised in that** said management of said displacement comprises the management of a displacement from said initial position to said final position of the vehicle, of which the lane-changing assistance system (1) has emitted said localisation datum.

5. Method according to one of claims 1 to 4, **characterised in that** said management of said displacement comprises the management of a repositioning on said second lane of every other vehicle located upstream of said dummy real vehicle and of which the communication device (34) of the lane-changing system (3) designed to be provided on said vehicle has received said localisation datum.

6. Method according to one of claims 1 to 5, **characterised in that** said management is capable of creating an insertion gap at the location of said final position.

7. Method according to one of claims 1 to 6, **characterised in that** the reception of a first and a second localisation datum by the same communication device (14, 34) of a lane-changing assistance system (1, 3) of a vehicle is capable of triggering a safety procedure for said vehicle.

8. Method according to one of claims 1 to 7, **characterised in that** said creation is able to be influenced by the reception of a localisation datum of a virtual clone of another vehicle.

9. Method according to one of claims 1 to 8, **characterised in that** said management comprises a determination of a field of movement for said vehicle.

10. Lane-changing assistance system (1) designed to be provided on a motor vehicle and to facilitate a lane-changing manoeuvre from an initial position on a first lane to a final position on a second lane, said system comprising:
- a localisation device (11) capable of determining said initial position of said vehicle and transmitting said initial position to a controller (12);
- an obstacle detection system (13) capable of determining at least one relative position of at least one other vehicle relative to said vehicle and transmitting said relative position of said other vehicle to said controller (12);
- a controller (12) capable of determining said final position as a function of a set of final data comprising at least said initial position;
- a device for generating a virtual clone (121) capable of creating a virtual clone of said vehicle and simulating by means of said virtual clone the presence of a dummy real vehicle in said final position by generating a localisation datum of said virtual clone of said vehicle designed to permit a localisation of said virtual clone in said final position;
and being **characterised in that** it comprises
- a communication device (14) capable of exchanging at least one localisation datum with at least one further communication device (34) designed to be provided in a lane-changing assistance system (3) of another vehicle and with said controller (12).

11. System according to claim 10, **characterised in that** said controller (12) comprises a mapping system (122), a movement management unit (123) and said device for generating a virtual clone (121).

12. System according to one of claims 10 or 11, **characterised in that** said controller (12) is capable of managing a displacement of said vehicle as a function of said set of final data.

13. System according to one of claims 10 to 12, **characterised in that** said localisation datum comprises geodesic coordinates of said final position and characteristic data of said vehicle.

14. System according to one of claims 10 to 13, **characterised in that** said controller (12) is capable of cooperating with a system to control said vehicle designed to guide said vehicle.

15. System according to one of claims 12 to 14, **characterised in that** said controller (12) is capable of managing a displacement of said vehicle from said initial position to said final position.
